# EUROPÄISCHE PATENTSCHRIFT

(11) **EP 0 998 880 B1**
(45) Veröffentlichungstag und Bekanntmachung des Hinweises auf die Patenterteilung: **20.04.2005**
(21) Anmeldenummer: 99120958.6
(22) Anmeldetag: 03.11.1999
(51) Int. Cl.: A61C 1/08, A61C 19/00

(54) **Zahnärztliches Präparationsinstrument**
Dental preparation instrument
Instrument pour préparation dentaire

(30) Priorität: 04.11.1998 DE 19850834
(43) Veröffentlichungstag der Anmeldung: 10.05.2000
(73) Patentinhaber: Sirona Dental Systems GmbH, 64625 Bensheim (DE)
(72) Erfinder: Oehme, Bernd, 55130 Mainz (DE); Schreiber, Jürgen, 64625 Bensheim (DE); Sutter, Ralf, 69469 Weinheim (DE); Weber, Jürgen, 60529 Frankfurt (DE)
(74) Vertreter: Sommer, Peter

(56) Entgegenhaltungen:
- EP-A- 0 780 103
- DE-A- 2 701 229
- PATENT ABSTRACTS OF JAPAN vol. 1998, no. 11, 30. September 1998 (1998-09-30) & JP 10 165419 A (OSADA RES INST LTD), 23. Juni 1998 (1998-06-23)

## Beschreibung

Die Erfindung bezieht sich auf ein zahnärztliches Präparationsinstrument zur Bearbeitung von Zähnen mit einem Bohrisntrument oder mit einem in Schwingung versetzbaren Werkzeug mit einer Lichtquelle zum Ausleuchten einer Präparationsstelle und/oder zum Aushärten von in einer Zahnkavität befindlichem lichthärtendem Kunststoff-Füllmaterial.

Präparationsinstrumente, die heute im dentalmedizinischen Bereich eingesetzt werden, sind üblicherweise mit einer Lichtquelle zur Ausleuchtung des Reparationsfeldes ausgestattet. Die dazu verwendeten Lichtquellen emittieren weißes Licht mit einer Farbtemperatur von ca. 2500 K bis 6000 K. In der Regel werden hierzu Halogenlampen eingesetzt, die entweder im Präparationsinstrument selbst oder in einer Anschlußarmatur, an die das Instrument anschließbar ist, angeordnet sind. Die Lichtübertragung von der Lichtquelle zur Austrittsstelle vom Kopfteil des Präparationsinstruments erfolgt über Lichtleiter, die als Glasstab, Glasfaserstab, Faserbündel oder Kunststoffleiter ausgeführt sind. Solche Lichtleiter stellen bei Instrumenten einen nennenswerten Kostenfaktor dar. Gleiches gilt für die Halogenlampen, die üblicherweise auch gekühlt werden müssen. Solche Halogen-Miniaturlampen, wie sie derzeit in der Anwendung sind, haben typischerweise eine Lebensdauer von ca. 40 bis 50 Betriebsstunden.

Neben den vorerwähnten Präparationsinstrumenten, die hauptsächlich als Präparationsinstrumente ausgebildet sind, gibt es auch Präparationsinstrumente, die ausschließlich zum Aushärten von Kunststoff-Füllmaterialien eingesetzt werden. Solche Präparationsinstrumente sind beispielsweise aus der DE-U 77 24 083 bekannt. Die zum Aushärten verwendeten Füllmaterialien sind aus Kunststoff und werden als Ersatzstoff für Amalgam eingesetzt und in die Zahnkavität in plastischem mehr oder weniger viskosem Zustand eingebracht. Nach dem Einbringen werden die Füllmaterialien durch Lichtpolymerisation ausgehärtet. Die Polymerisation erfolgt in der Regel mit blauem Licht, zum Beispiel mit einer Wellenlänge von 420 nm bis 500 nm. Die Lichtquelle ist bei solchen Präparationsinstrumenten entweder im Instrument integriert angeordnet, wobei die Lichtübertragung zum Präparationsfeld durch einen Lichtleiter erfolgt, oder die Lichtquelle ist in der Behandlungseinheit angeordnet, wobei die Übertragung des Lichts von der Behandlungseinheit zum Präparationsinstrument bis zum Lichtaustritt mittels eines Lichtleiters erfolgt. Die Präparationsinstrumente mit integrierter Lichtquelle werden über elektrische Leitungen von der Behandlungseinheit aus versorgt. Auch akkubetriebene Präparationsinstrumente sind an sich bekannt.

In der DE-C- 196 13 566 wird außerdem eine Vorrichtung zum Aushärten von Füllungsmaterialien aus Kunststoff beschrieben, bei der eine Laserlichtquelle eingesetzt wird.

In der JP 101 654 19 wird darüber hinaus eine Aushärtelampe offenbart, die drei, über einen Schalter schaltbare LED aufweist, wobei jede LED eine eigene Funktion erfüllt.

Aus der EP-A-0 753 286 ist ein Handstück bekannt, bei dem ein Lichtleiter innerhalb einer Griffhülse zu einer vor einem Kopfteil angeordneten Lichtaustrittsstelle vorgesehen ist. Dabei stützt sich der Lichtleiter rückseitig an einem Schaft des Kopfteils ab. Der Erfindung liegt die Aufgabe zugrunde, ein zahnärztliches Präparationsinstrument der eingangs genannten Gattung anzugeben, welches die Nachteile der bekannten Präparationsinstrumente nicht aufweist, welches insbesondere kostengünstiger zu erstellen ist, keine zusätzliche Maßnahmen zur Abfuhr der von der Lichtquelle erzeugten Wärme erfordert, und welches in bezug auf die Lichterzeugung und Lichtübertragung weniger Einbauplatz benötigt und damit eine geringere Bauform des Präparationsinstruments zuläßt.

Die gestellte Aufgabe wird durch ein zahnärztliches Präparationsinstrument zur Bearbeitung von Zähnen mit einem Bohrinstrument oder mit einem in Schwingung versetzbaren Werkzeug mit einer Lichtquelle zum Ausleuchten einer Präparationsstelle und/oder zum Aushärten eines in einer Zahnkavität befindlichen lichthärtenden Kunststoff-Füllmaterials gelöst. Erfindungsgemäß ist das Instrument dadurch gekennzeichnet, daß als Lichtquelle eine Kaltlichtquelle eingesetzt ist, welche in unmittelbarer Nähe der Lichtaustrittsstelle des Präparationsinstruments Licht mit der für die jeweilige Anwendung benötigten Wellenlänge bereitstellt.

Als Kaltlichtquelle sollen Leuchtmittel verstanden werden, die im Gegensatz zu Glühlampen bei der hier zur Diskussion stehenden Lichtleistung von ca. 40 Lumen, praktisch keine bzw. nur eine geringe Wärme erzeugen. Besonders vorteilhaft ist die Verwendung einer LED (lichtemittierende Diode) oder einer Miniaturleuchtstofflampe. Die Kaltlichtquelle ist mit Vorteil im Kopfteil des Präparationsinstruments angeordnet, wobei die Lichtverluste besonders gering sind, wenn die Kaltlichtquelle selbst die Lichtaustrittsfläche am präparationsseitigen Ende des Kopfteils des Präparationsinstruments bildet. Die Kaltlichtquelle kann aus mehreren einzelnen Leuchtmitteln gebildet sein. Besonders vorteilhaft ist es, wenn mindestens eines der Leuchtmittel eine zum Aushärten geeignete Wellenlänge emittiert und mindestens ein anderes eine zum Ausleuchten des Präparationsfeldes geeignete Wellenlänge. Ein Präparationsinstrument mit einer solchen Anordnung kann dann sowohl zum Beleuchten als auch zum Aushärten von lichthärtenden Kunststoffüllmaterialien (composites) eingesetzt werden.

Hinsichtlich der geometrischen Anordnung der einzelnen Leuchtmittel ist es denkbar, diese ringförmig, linienförmig oder auch in anderen geometrischen Formationen am Präparationsinstrument anzuordnen. Bei einer Anordnung, die eine alternative Benutzung zum Ausleuchten und zum Aushärten ermöglicht, ist es vorteilhaft, die Leuchtmittel am Umfang der Spitze des Präparationsinstruments verteilt anzuordnen, wobei Lichtquellen gleicher Emissionen jeweils diametral zueinander auf den Fokus der Präparationsstelle ausgerichtet angeordnet sind. Vorteilhafte Ausgestaltungen und Weiterbildungen der Erfindung ergeben sich aus der nachfolgenden Beschreibung mehrerer Ausführungsbeispiele anhand der Zeichnung. Es zeigen:
- Fig. 1: einen Teil eines zahnärztlichen Präparationsinstruments, teilweise im Schnitt,
- Fig. 2: ein Zahnsteinentfernungs-Handinstrument im Schnitt und
- Fig. 3: eine Variante zu Fig. 2 im Schnitt entlang der Linie V/V in Fig. 2.

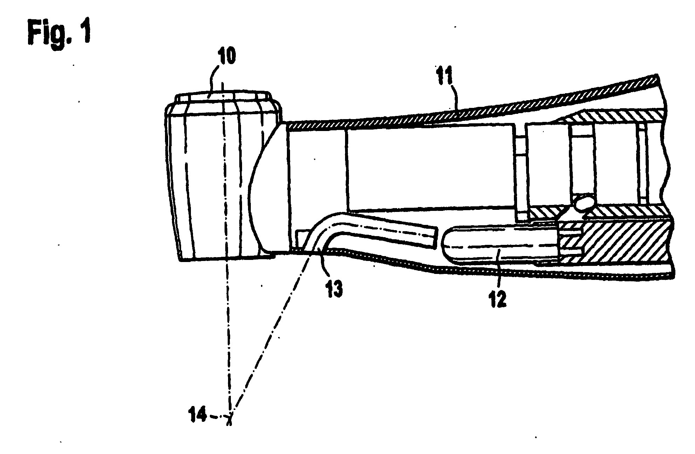

Die Fig. 1 zeigt teilweise im Schnitt einen Teil eines an sich bekannten Präparationsinstruments zur Präparation von Zähnen; bei diesem Präparationsinstrument ist in bekannter Weise im Kopfteil 10 ein in Rotation versetzbarer Antrieb für ein (nicht dargestelltes) Bohrinstrument angeordnet. Im sogenannten Halsteil 11, in welchem sich Teile des Antriebs befinden, ist eine LED 12 angeordnet, die über nicht dargestellte Versorgungsleitungen mit der notwendigen Spannung von 3 Volt und einem Strom von 50 mA versorgt wird. Das von der LED emittierte Licht wird über einen extrem kurzen Lichtwellenleiter 13 auf den die Präparationsstelle repräsentierenden Fokus 14 geworfen. Die LED kann hier zum Ausleuchten der Präparationsstelle dienen; denkbar ist es auch, sie gleichzeitig zum Aushärten der bereits erwähnten Kunststoffüllmaterialien einzusetzen. Für den zuletzt genannten Anwendungsfall ist eine umschaltbare LED vorzusehen, die mit zwei verschiedenen Spannungsquellen betrieben werden kann. Mittels des Anschlusses an die eine Spannungsquelle wird weißes Licht emittiert, welches zum Beleuchten dient, mittels des Anschlusses an die andere Spannungsquelle wird blaues Licht zum Aushärten der Kunststoffüllmaterialien erzeugt.

Besonders vorteilhaft ist der Ersatz des Lichtwellenleiters durch einen Spiegel oder ein geeignetes Prisma, da hier die Lichtverluste minimal sind.

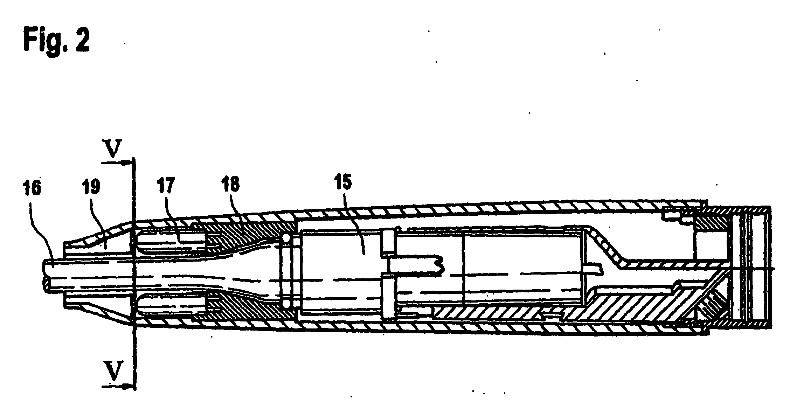

Die Fig. 2 zeigt ein sogenanntes Ultraschall-Zahnsteinentfernungs-Handinstrument, welches mittig einen allgemein mit 15 bezeichneten Antrieb und ein von diesem in Schwingungen versetzbares Werkzeug 16 aufweist. Um das Werkzeug 16 herum sind mehrere LEDs 17 ringförmig angeordnet. Sie werden von einer gemeinsamen Halterung 18 getragen, durch die auch die entsprechenden Anschlußleitungen geführt sind. Die Stirnseiten der LEDs 17 korrespondieren mit einem kreisring- oder kreisringsegmentartig ausgebildeten Lichtleiter 19, der das Licht der LEDs auf die Präparationsstelle leitet. Durch die Vielzahl der LEDs kann eine ausreichende Leuchtdichte erzielt werden.

Für den Fall, daß mit dem beschriebenen Präparationsinstrument auch ein Aushärten von Kunststoffüllmaterial durchgeführt werden soll, kann es vorteilhaft sein, die LEDs so einzusetzen bzw. zu betreiben, daß einige LEDs blaues", zum Aushärten des Füllmaterials geeignetes Licht emittieren, die anderen weißes", zum Beleuchten der Präparationsstelle geeignetes Licht emittieren. Erreicht werden kann dies dadurch, daß entweder LEDs mit unterschiedlicher Emission oder, wie zuvor erwähnt, umschaltbare LEDs verwendet werden.

Die zum Umschalten notwendigen Maßnahmen können entweder extern des Präparationsinstruments angeordnet sein oder teilweise auch in einem zur Verfügung stehenden freien Platz im Präparationsinstrument, beispielsweise im Griffteil des Präparationsinstruments. Im Präparationsinstrument könnte beispielsweise eine Steuerelektronik angeordnet sein, die ein Modulationssignal auswertet, das von einem extern des Präparationsinstruments angeordneten zahnärztlichen Gerät über die vorhandenen Stromzuführungsleitungen gesendet wird. Das über die Leitungen gesendete Modulationssignal kann dazu verwendet werden, zwischen dem Modus Beleuchten" und Aushärten" der Lampen zu wechseln.

Das Umschalten kann auch im Präparationsinstrument selbst mit Hilfe von geeigneten Schaltern und Tastern erfolgen. Die Einschaltdauer der LEDs im Falle der Anwendung zum Aushärten der Füllmaterialien kann durch ein Zeitschaltglied, die in der besagten Elektronik eingearbeitet ist, vorgewählt werden, wobei ein entsprechender Schiebe- oder Drehregler die Aushärtezeit vorgibt.

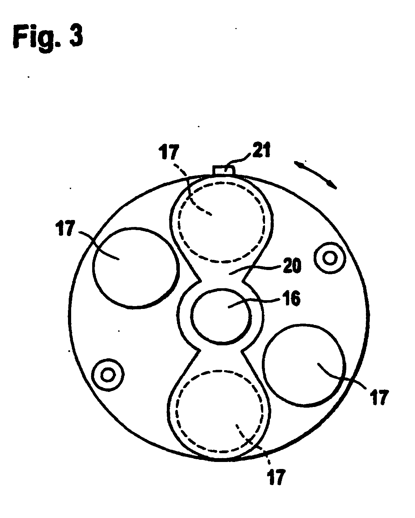

Die Fig. 3 zeigt in Verbindung mit der Ausführung nach Fig. 2 eine weitere vorteilhafte Variante, mit der ein mechanisches Umschalten von Beleuchten" auf "Aushärten" möglich ist.

Bei dieser Variante wird davon ausgegangen, daß um das Werkzeug 16 herum 4 LEDs 17 angeordnet sind. Zwischen den LEDs 17 und dem Lichtleiterring ist zusätzlich zu dem in Fig. 4 beschriebenen Aufbau eine Filterscheibe 20 in der angegebenen Pfeilrichtung schwenkbar angeordnet. Die den LEDs vorgesetzte Filterscheibe 20 ist so ausgebildet, daß damit die Lichtfarbe von zumindest 2 LEDs entsprechend verändert werden kann. Die Filterscheibe 20 kann von Hand betätigt werden; hierzu kann zumindest das eine Ende 21 der Scheibe durch eine schlitzförmige Öffnung im Gehäuse des Präparationsinstruments hindurchgeführt sein.

## Patentansprüche

1. Zahnärztliches Präparationsinstrument zur Bearbeitung von Zähnen mit einem Bohrinstrument oder mit einem in Schwingung versetzbaren Werkzeug mit einer Lichtquelle (5, 12, 17) zum Ausleuchten einer Präparationsstelle **dadurch gekennzeichnet, dass** die Lichtquelle (12, 17) in unmittelbarer Nähe der Lichtaustrittsstelle des Instruments Licht mit einer zum Aushärten geeigneten Wellenlänge und Licht mit einer zum Ausleuchten der Präparationsstelle geeigneten Wellenlänge bereitstellt.

2. Zahnärztliches Präparationsinstrument nach Anspruch 1, **dadurch gekennzeichnet, daß** die Lichtquelle im der zu präparierenden Stelle zugewandten Endbereich des Instrumentes angeordnet ist.

3. Zahnärztliches Präparationsinstrument nach Anspruch 2, **dadurch gekennzeichnet, daß** die Lichtquelle am der zu präparierenden Stelle zugewandten Ende des Instrumentes angeordnet ist.

4. Zahnärztliches Präparationsinstrument nach Anspruch 3, **dadurch gekennzeichnet, daß** die Lichtquelle selbst die Lichtaustrittsfläche bildet.

5. Zahnärztliches Präparationsinstrument nach einem der Ansprüche 1 bis 4, **dadurch gekennzeichnet, daß** die Lichtquelle mehrere Einzelleuchtmittel (17) umfaßt.

6. Zahnärztliches Präparationsinstrument nach Anspruch 5, **dadurch gekennzeichnet, daß** die Einzelleuchtmittel (17) mindestens eine Lichtquelle, die Licht mit einer zum Aushärten geeigneten Wellenlänge emittiert und mindestens eine Lichtquelle, die Licht mit einer zum Ausleuchten der Präparationsstelle geeigneten Wellenlänge emittiert, umfassen.

7. Zahnärztliches Präparationsinstrument nach Anspruch 6, **dadurch gekennzeichnet, daß** die Einzelleuchtmittel (17) vorzugsweise ringförmig verteilt angeordnet sind, wobei Einzelleuchtmittel (17) gleicher Emission jeweils diametral zueinander und auf den Fokus der Präparationsstelle ausgerichtet, angeordnet sind.

8. Zahnärztliches Präparationsinstrument nach einem der Ansprüche 1 bis 3, **dadurch gekennzeichnet, daß** eine Lichtquelle vorgesehen ist, deren Licht von einer zum Aushärten geeigneten Wellenlänge auf eine zum Ausleuchten der Präparationsstelle geeignete Wellenlänge umschaltbar ist.

9. Zahnärztliches Präparationsinstrument nach Anspruch 8, **dadurch gekennzeichnet, daß** zum Umschalten ein der Lichtquelle vorschaltbarer Filter (20) vorgesehen ist.

10. Zahnärztliches Präparationsinstrument nach einem der Ansprüche 1 bis 9, **dadurch gekennzeichnet, daß** Mittel vorgesehen sind, mit denen die Einschaltdauer der Lichtquelle festgelegt werden kann.

11. Zahnärztliches Präparationsinstrument nach Anspruch 10, **dadurch gekennzeichnet, daß** die Mittel zur Festlegung der Einschaltdauer im Instrument angeordnet sind.

12. Zahnärztliches Präparationsinstrument nach einem der Ansprüche 1 bis 11, **dadurch gekennzeichnet, daß** als Lichtquelle eine LED verwendet ist.

13. Zahnärztliches Präparationsinstrument nach einem der Ansprüche 1 bis 11, **dadurch gekennzeichnet, daß** als Lichtquelle eine Miniaturleuchtstofflampe verwendet ist.

## Claims

1. A dental preparation instrument for processing teeth with a drilling instrument or oscillatable tool provided with a light source (5, 12, 17) for illumination of a preparation site, **characterized in that** said light source (12,17) emits, in a region very close to the point at which light emerges from the instrument, light having a wavelength suitable for curing purposes and light having a wavelength suitable for illumination of the preparation site.

2. A dental preparation instrument as defined in claim 1, **characterized in that** said light source is disposed **in that** end region of the instrument which faces the area to be prepared.

3. A dental preparation instrument as defined in claim 2, **characterized in that** said light source is disposed at that end of the instrument which faces the area to be prepared.

4. A dental preparation instrument as defined in claim 3, **characterized in that** said light source itself forms the light-emerging surface.

5. A dental preparation instrument as defined in any one of claims 1 to 4, **characterized in that** said light source comprises a plurality of individual means of illumination (17).

6. A dental preparation instrument as defined in claim 5, **characterized in that** each individual means of illumination (17) comprises at least one light source emitting light having a wavelength suitable for curing purposes and at least one light source emitting light having a wavelength suitable for illumination of the preparation site.

7. A dental preparation instrument as defined in claim 6, **characterized in that** said individual means of illumination (17) are preferably distributed along the circumference of an imaginary circle, those means of illumination (17) showing the same type of light emission being diametrically opposed to each other and oriented so as to be focused on the preparation site.

8. A dental preparation instrument as defined in any one of claims 1 to 3, **characterized in that** a light source is provided which is capable of being switched over from the emission of light of a wavelength suitable for curing purposes to the emission of light of a wavelength suitable for illumination of the preparation site.

9. A dental preparation instrument as defined in claim 8, **characterized in that**, to effect said switch-over, a filter (20) can be placed in front of said light source.

10. A dental preparation instrument as defined in any one of claims 1 to 9, **characterized in that** means are provided for defining the switched-on time of the light source.

11. A dental preparation instrument as defined in claim 10, **characterized in that** said means for defining said switched-on time are disposed within the instrument.

12. A dental preparation instrument as defined in any one of claims 1 to 11, **characterized in that** the light source used is an LED.

13. A dental preparation instrument as defined in any one of claims 1 to 11, **characterized in that** the light source used is a miniature fluorescent lamp.

## Revendications

1. Instrument pour préparation médicale dentaire destiné à traiter des dents, qui comprend un instrument de forage ou un outil apte à être déplacé en oscillation et qui comprend une source lumineuse (5, 12, 17) destinée à éclairer un emplacement de préparation, **caractérisé en ce qu'**à proximité immédiate de la sortie de lumière de l'instrument, la source lumineuse (12, 17) émet de la lumière dont la longueur d'onde convient au durcissement et de la lumière dont la longueur d'onde convient à l'éclairage de l'emplacement de préparation.

2. Instrument pour préparation médicale dentaire selon la revendication 1, **caractérisé en ce que** la source lumineuse est agencée dans la région de l'extrémité de l'instrument qui est orientée vers l'emplacement à préparer.

3. Instrument pour préparation médicale dentaire selon la revendication 2, **caractérisé en ce que** la source lumineuse est agencée à l'extrémité de l'instrument qui est orientée vers l'emplacement à préparer.

4. Instrument pour préparation médicale dentaire selon la revendication 3, **caractérisé en ce que** la source lumineuse forme elle-même la surface de sortie de lumière.

5. Instrument pour préparation médicale dentaire selon l'une des revendications 1 à 4, **caractérisé en ce que** la source lumineuse comprend plusieurs moyens d'éclairage différents (17).

6. Instrument pour préparation médicale dentaire selon la revendication 5, **caractérisé en ce que** les différents moyens d'éclairage (17) comprennent au moins une source lumineuse qui émet de la lumière à une longueur d'onde qui convient au durcissement et au moins une source lumineuse qui émet de la lumière à une longueur d'onde qui convient à l'éclairage de l'emplacement de préparation.

7. Instrument pour préparation médicale dentaire selon la revendication 6, **caractérisé en ce que** les moyens d'éclairage distincts (17) sont de préférence agencés en cercle, les moyens d'éclairage (17) de même émission étant chaque fois agencés en des positions diamétralement opposées et étant orientés vers le foyer de l'emplacement de préparation.

8. Instrument pour préparation médicale dentaire selon l'une des revendications 1 à 3, **caractérisé en ce qu'**une source lumineuse dont on peut faire commuter la lumière d'une longueur d'onde qui convient au durcissement à une longueur d'onde qui convient à l'éclairage de l'emplacement de préparation est prévue.

9. Instrument pour préparation médicale dentaire selon la revendication 8, **caractérisé en ce qu'**un filtre (20) qui peut être placé devant la source lumineuse est prévu en vue de la commutation.

10. Instrument pour préparation médicale dentaire selon l'une des revendications 1 à 9, **caractérisé en ce que** des moyens qui permettent de spécifier le temps de fonctionnement de la source lumineuse sont prévus.

11. Instrument pour préparation médicale dentaire selon la revendication 10, **caractérisé en ce que** les moyens de spécification du temps de fonctionnement sont agencés dans l'instrument.

12. Instrument pour préparation médicale dentaire selon l'une des revendications 1 à 11, **caractérisé en ce que** comme source lumineuse, on utilise des diodes électroluminescentes (LED).

13. Instrument pour préparation médicale dentaire selon l'une des revendications 1 à 11, **caractérisé en ce que** comme source lumineuse, l'on utilise un tube fluorescent miniaturisé.
